# EUROPÄISCHE PATENTSCHRIFT

(11) **EP 1 769 146 B1**
(45) Veröffentlichungstag und Bekanntmachung des Hinweises auf die Patenterteilung: **02.06.2010**
(21) Anmeldenummer: 05758890.7
(22) Anmeldetag: 08.07.2005
(51) Int. Cl.: F02B 25/02, F02M 69/10, F02B 33/04, F02M 69/04

(54) **ZWEITAKT-VERBRENNUNGSMOTOR**
TWO-STROKE INTERNAL COMBUSTION ENGINE
MOTEUR A COMBUSTION INTERNE A DEUX TEMPS

(30) Priorität: 21.07.2004 AT 12412004
(43) Veröffentlichungstag der Anmeldung: 04.04.2007
(73) Patentinhaber: Kirchberger, Roland, 8052 Graz (AT)
(72) Erfinder: Kirchberger, Roland, 8052 Graz (AT)
(74) Vertreter: Hübscher, Helmut
(86) Internationale Anmeldenummer: PCT/AT2005/000256
(87) Internationale Veröffentlichungsnummer: WO 2006/007614

(56) Entgegenhaltungen:
- EP-A- 0 980 969
- US-A- 5 144 919
- US-A- 5 503 119
- PATENT ABSTRACTS OF JAPAN Bd. 1996, Nr. 02, 29. Februar 1996 (1996-02-29) & JP 07 259707 A (YAMAHA MOTOR CO LTD), 9. Oktober 1995 (1995-10-09)
- PATENT ABSTRACTS OF JAPAN Bd. 2000, Nr. 13, 5. Februar 2001 (2001-02-05) & JP 2000 283008 A (SUZUKI MOTOR CORP), 10. Oktober 2000 (2000-10-10)

## Beschreibung

Die Erfindung bezieht sich auf einen Zweitakt-Verbrennungsmotor mit wenigstens einem Zylinder, mit einem über zumindest einen Überströmkanal mit dem Zylinder strömungsverbundenen, mit einer Luftansaugleitung versehenen Kurbelgehäuse und mit einer Einspritzeinrichtung zum wahlweisen Eintragen eines Kraftstoffes in den Zylinder oder in das Kurbelgehäuse.

Um die Spülverluste von Zweitakt-Verbrennungsmotoren mit einer Gemischbildung durch ein Einspritzen von Kraftstoff in die in das Kurbelgehäuse angesaugte Frischluft zu verringern, kann der Kraftstoff entweder beim Überströmen der in das Kurbelgehäuse angesaugten Luft in den Zylinder im Bereich des Überströmkanals (JP 07259707A) oder unmittelbar in den Zylinder (EP 0980969 A2) eingespritzt werden. In beiden Fällen ist eine zeitverzögerte Kraftstoffeinspritzung zur Verringerung der Spülverluste möglich. Mit der verzögerten Kraftstoffeinspritzung geht allerdings eine unvollkommene Gemischbildung einher, was zu einer verringerten Drehzahlfestigkeit und einer unvollständigen Verbrennung führt. Zur Vermeidung dieser Nachteile wurde bereits vorgeschlagen (US 47 79 581 A), den Kraftstoff in Abhängigkeit von der Belastung des Motors bzw. von der Motordrehzahl entweder in die in das Kurbelgehäuse angesaugte Luft oder im Ausströmbereich des Überströmkanals durch diesen in den Zylinder einzuspritzen. Zu diesem Zweck wird je eine Einspritzdüse in der Luftansaugleitung des Kurbelgehäuses und im Mündungsbereich des Überströmkanals angeordnet, wobei die Einspritzdüsen Ober eine Steuereinrichtung wahlweise in Abhängigkeit von der Motordrehzahl angesteuert werden, so daß bei hohen Motordrehzahlen der Kraftstoff über die Einspritzdüse in der Luftansaugleitung zur Gemischbildung in die in das Kurbelgehäuse angesaugte Luft, bei niedrigen Drehzahlen jedoch über die zylinderseitig Einspritzdüse in die aus dem Kurbelgehäuse in den Zylinder überströmende Verbrennungsluft eingespritzt wird. Nachteilig bei dieser bekannten Einspritzeinrichtung ist jedoch der Konstruktionsaufwand, der sich durch die einerseits dem Kurbelgehäuse und anderseits dem Zylinder zugeordneten Einspritzdüsen ergibt.

Der Erfindung liegt somit die Aufgabe zugrunde, einen Zweitakt-Verbrennungsmotor der eingangs geschilderten Art so auszugestalten, daß eine von der Motorbelastung abhängige Gemischbildung entweder im Kurbelgehäuse oder im Zylinder möglich wird, ohne den erhöhten Konstruktionsaufwand durch gesonderte Einspritzdüsen in Kauf nehmen zu müssen.

Die Erfindung löst die gestellte Aufgabe dadurch, daß die Einspritzeinrichtung wenigstens eine Einspritzdüse umfaßt, die gegen den Einströmbereich des von der Luftansaugleitung ausgehenden Überströmkanals hin ausgerichtet und in Abhängigkeit von der Bewegungsrichtung des Kolbens und der Steuerung des Überströmkanals ansteuerbar ist.

Zufolge der Ausrichtung der Einspritzdüse in Richtung auf den Einströmbereich des von der Luftansaugleitung ausgehenden Überströmkanals hängt der Förderweg des eingespritzten Kraftstoffs von der im Bereich der Einspritzdüse herrschenden Luftströmung und damit von der Bewegungsrichtung des Kolbens und der Steuerung des Überströmkanals durch den Kolben ab. Wird während des Verdichtungshubes des Kolbens Luft über die Luftansaugleitung in das Kurbelgehäuse angesaugt, so wird der gegen den Einströmbereich des Überstromkanals eingespritzte Kraftstoff mit der angesaugten Luft in das Kurbelgehäuse zur Gemischbildung mitgerissen. Bei einer Kraftstoffeinspritzung am Ende des Arbeitshubes des Kolbens wird der Kraftstoff jedoch bei geöffnetem Überströmkanal mit der aus dem Kurbelgehäuse über den Überströmkanal in den Zylinder geförderten Luft mitgenommen, so daß die Gemischbildung im Überströmkanal und im Zylinder zeitverzögert zur Spülung erfolgen kann. Durch die Wahl der Einspritzintervalle in Abhängigkeit von der Bewegungsrichtung des Kolbens und der Steuerung des Überströmkanals kann somit je nach der Motordrehzahl bzw. der Motorbelastung die Gemischbildung im Kurbelgehäuse oder außerhalb davon erfolgen, um einerseits die Spülverluste klein zu halten und anderseits eine gute Drehzahlfestigkeit sicherzustellen.

Besonders einfache Konstruktionsverhältnisse ergeben sich in diesem Zusammenhang, wenn die Einspritzdüse auf der dem Einströmbereich des Überströmkanals gegenüberliegenden Umfangsseite der Luftansaugleitung angeordnet ist. In diesem Fall erstreckt sich der Sprühkegel der Einspritzdüse quer zur Luftansaugleitung, was für die Mitnahme des eingespritzten Kraftstoffs vorteilhafte Strömungsverhältnisse sowohl beim Ansaugen der Luft in das Kurbelgehäuse als auch beim Überströmen der angesaugten Luft in den Zylinder schafft.

Eine Konstruktionsvariante ergibt sich, wenn die Einspritzdüse mit Abstand vom Einströmbereich in den Überströmkanal mündet und entgegen der Überströmrichtung ausgerichtet ist. Aufgrund des gegensinnig zur Luftströmung in den Überströmkanal eingespritzten Kraftstoffs wird eine besonders innige Vermischung mit der überströmenden Luft erreicht, die den Kraftstoff entgegen der Einspritzrichtung in den Zylinder einträgt. Bei geschlossenem Überströmkanal gelangt der eingespritzte Kraftstoff in den Einströmbereich des Überströmkanals und wird mit der angesaugten Luft in das Kurbelgehäuse zur Gemischbildung gefördert.

In der Zeichnung ist der Erfindungsgegenstand beispielsweise dargestellt. Es zeigen
- Fig. 1: einen erfindungsgemäßen Zweitakt-Verbrennungsmotor in einer für das Kraftstoffeinspritzen zur Gemischbildung außerhalb des Kurbelgehäuses charakteristischen Drehstellung in einem schematischen Axialschnitt,
- Fig. 2: den Zweitakt-Verbrennungsmotor nach der Fig. 1 in einer Drehstellung für das Kraftstoffeinspritzen zur Gemischbildung innerhalb des Kurbelgehäuses und die
- Fig. 3 und 4: eine den Fig. 1 und 2 entsprechende Darstellung eines Zweitakt-Verbrennungsmotors mit einer gegenüber den Fig. 1 und 2 unterschiedlichen Anordnung der Einspritzdüse.

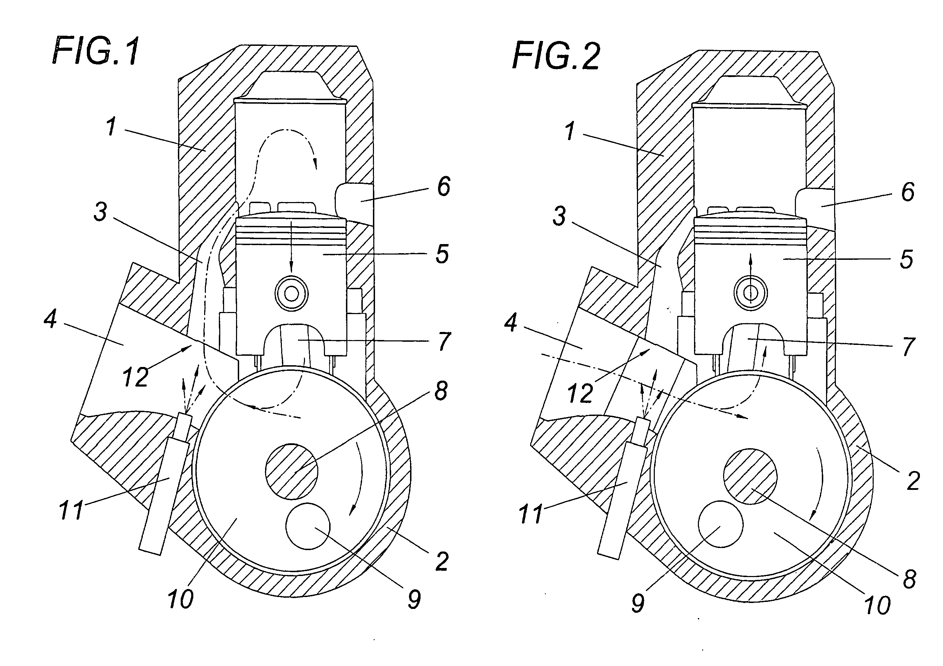

Der Zweitakt-Verbrennungsmotor gemäß den Fig. 1 und 2 weist wenigstens einen Zylinder 1 auf, der mit einem Kurbelgehäuse 2 einen Motorblock bildet. Zwischen dem Kurbelgehäuse 2 und dem Zylinder 1 ist wenigstens ein Überströmkanal 3 vorgesehen, der von der Luftansaugleitung 4 ausgeht, über die durch ein vorgeschaltetes Rückschlagventil Luft in das Kurbelgehäuse 2 angesaugt wird, und zwar mit Hilfe der sich durch den Kolben 5 ergebenden Kurbelgehäusepumpe. Der im Zylinder 1 geführte Kolben 5, der sowohl den Überströmkanal 3 sowie gegebenenfalls vorgesehene weitere Überströmkanäle sowie den Auslaßkanal 6 steuert, ist in herkömmlicher Weise über ein Pleuel 7 mit einer im Kurbelgehäuse 2 gelagerten Kurbelwelle 8 verbunden, deren den Kurbelzapfen 9 zur Lagerung des Pleuels 7 aufnehmende Kurbelwangen mit 10 bezeichnet sind.

Zum Einspritzen des Kraftstoffs dient eine Einspritzdüse 11, die über eine nicht dargestellte Steuereinrichtung angesteuert wird. Diese Einspritzdüse 11 ist auf der dem Einströmbereich 12 des Überströmkanals 3 gegenüberliegenden Seite der Luftansaugleitung 4 angeordnet und in Richtung zum Einströmbereich 12 des Überströmkanals 3 ausgerichtet. Erfolgt die Ansteuerung der Einspritzdüse 11 gemäß der Fig. 1 während der Freigabe des Überströmkanals 3 am Ende des Arbeitshubes, bevor der Kolben 5 den unteren Totpunkt erreicht hat, so wird der Kraftstoff in die aus dem Kurbelgehäuse 2 durch den Überströmkanal 3 überströmende Luft eingespritzt, wie dies durch die strichpunktiert angedeuteten Strömungspfeile für die Luftführung in der Fig. 1 angedeutet ist. Dies bedeutet, daß die Gemischbildung außerhalb des Kurbelgehäuses 2 im Bereich des Überströmkanals 3 und anschließend im Zylinder 1 erfolgt und demnach zeitlich so gesteuert werden kann, daß Spülverluste bei niedrigen Motordrehzahlen oder bei Teillast vermindert werden.

Für höhere Drehzahlen und Vollast kommt die gute Gemischaufbereitung im Kurbelgehäuse zum Tragen, wenn das Einspritzintervall in die Ansaugphase der Luft in das Kurbelgehäuse 2 gemäß der Fig. 2 verlegt wird, also in den Bereich des Verdichtungshubes des Kolbens 5. In diesem Fall wird der gegen den Einströmbereich 12 des Überströmkanals 3 gespritzte Kraftstoff mit der durch die strichpunktiert angedeuteten Strömungspfeile dargestellten Strömung der angesaugten Luft in das Kurbelgehäuse 2 mitgerissen, um im Endbereich des darauffolgenden Arbeitshubes des Kolbens 5 ein entsprechend aufbereitetes Gemisch durch den Überströmkanal 3 in den Zylinder zu fördern. Es kann somit in Abhängigkeit von der jeweiligen Bewegungsrichtung des Kolbens 5 das Einspritzintervall für die Einspritzdüse 11 so gewählt werden, daß der Kraftstoff entweder mit einer zeitlichen Verzögerung der Spülluft durch den Überströmkanal 3 oder der von der Kurbelgehäusepumpe in das Kurbelgehäuse 2 angesaugten Frischluft ausgegeben wird.

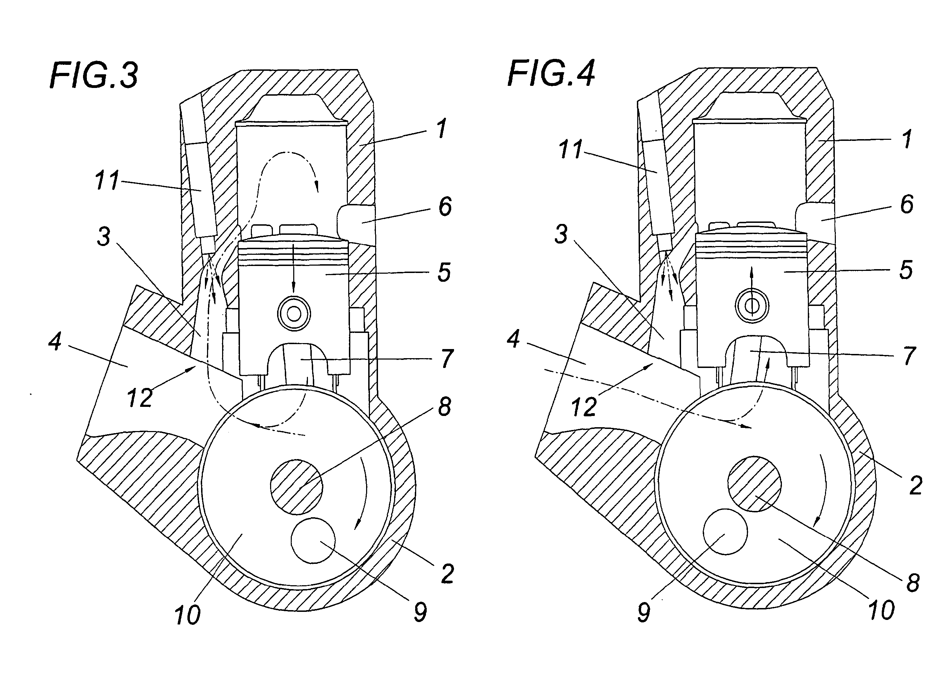

Zum Unterschied zu dem Ausführungsbeispiel nach den Fig. 1 und 2 ist nach den Fig. 3 und 4 die Einspritzdüse 11 nicht der Luftansaugleitung 4, sondern dem Überströmkanal 3 zugeordnet, und zwar mündet die Einspritzdüse 11 mit Abstand vom Einströmbereich 12 in den Überströmkanal 3, wobei der Kraftstoff entgegen der Überströmrichtung gegen den Einströmbereich gespritzt wird. Aufgrund dieser Anordnung der Einspitzdüse 11 wird somit bei einer Gemischbildung außerhalb des Kurbelgehäuses 2 gemäß der Fig. 3 der Kraftstoff entgegen der Richtung der aus dem Kurbelgehäuse 2 in den Zylinder 1 überströmenden Luft eingespitzt, was zu einer besonders innigen Gemischbildung führt. Zur Gemischbildung innerhalb des Kurbelgehäuses 2 wird entsprechend der Fig. 4 der Kraftstoff durch den Überströmkanal 3 in die Luftansaugleitung 4 eingespritzt, wo er von der in das Kurbelgehäuse 2 angesaugten Frischluft mitgerissen wird.

## Patentansprüche

1. Zweitakt-Verbrennungsmotor mit wenigstens einem Zylinder (1), mit einem über zumindest einen Überströmkanal (3) mit dem Zylinder (1) strömungsverbundenen, mit einer Luftansaugleitung (4) versehenen Kurbelgehäuse (2) und mit einer Einspritzeinrichtung zum wahlweisen Eintragen eines Kraftstoffes in den Zylinder (1) oder in das Kurbelgehäuse (2), **dadurch gekennzeichnet, daß** die Einspritzeinrichtung wenigstens eine Einspritzdüse (11) umfaßt, die gegen den Einströmbereich (12) des von der Luftansaugleitung (4) ausgehenden Überströmkanals (3) hin ausgerichtet und in Abhängigkeit von der Bewegungsrichtung des Kolbens (5) und der Steuerung des Überströmkanals (3) ansteuerbar ist.

2. Zweitakt-Verbrennungsmotor nach Anspruch 1, **dadurch gekennzeichnet, daß** die Einspritzdüse (11) auf der dem Einströmbereich (12) des Überströmkanals (3) gegenüberliegenden Umfangsseite der Luftansaugleitung (4) angeordnet ist.

3. Zweitakt-Verbrennungsmotor nach Anspruch 1, **dadurch gekennzeichnet, daß** die Einspritzdüse (11) mit Abstand vom Einströmbereich (12) in den Überströmkanal (3) mündet und entgegen der Überströmrichtung ausgerichtet ist.

## Claims

1. Two-stroke internal combustion engine having at least one cylinder (1), having a crankcase (2) which is flow-connected to the cylinder (1) via at least one transfer passage (3) and is provided with an air intake line (4), and having an injection device for optionally introducing a fuel into the cylinder (1) or into the crankcase (2), **characterised in that** the injection device includes at least one injection nozzle (11) which is directed towards the inlet region (12) of the transfer passage (3) issuing from the air intake line (4) and can be controlled in dependence upon the direction of movement of the piston (5) and the control of the transfer passage (3).

2. Two-stroke internal combustion engine as claimed in Claim 1, **characterised in that** the injection nozzle (11) is disposed on the peripheral side of the air intake line (4) opposite the inlet region (12) of the transfer passage (3).

3. Two-stroke internal combustion engine as claimed in Claim 1, **characterised in that** the injection nozzle (11) opens into the transfer passage (3) at a spaced disposition from the inlet region (12) and is oriented oppositely to the transfer direction.

## Revendications

1. Moteur à combustion interne à deux temps, avec au moins un cylindre (1), avec un carter de vilebrequin (2), muni d'une conduite d'aspiration d'air (4), relié en écoulement au cylindre (1) par l'intermédiaire d'au moins un canal de transvasement (3), et avec un dispositif d'injection pour introduire, au choix, un carburant dans le cylindre (1) ou dans le carter de vilebrequin (2), **caractérisé en ce que** le dispositif d'injection comprend au moins un injecteur (11), orienté vers la zone d'entrée d'écoulement (12) du canal de transvasement (3) partant de la conduite d'aspiration d'air (4) et susceptible d'être commandé en fonction du sens de déplacement du piston (5) et de la commande du canal de transvasement (3).

2. Moteur à combustion interne à deux temps selon la revendication 1, **caractérisé en ce que** l'injecteur (11) est disposé sur le côté périphérique, opposé à la zone d'entrée d'écoulement (12) du canal de transvasement (3), de la conduite d'aspiration d'air (4).

3. Moteur à combustion interne à deux temps selon la revendication 1, **caractérisé en ce que** l'injecteur (11) débouche à distance de la zone d'entrée d'écoulement (12) dans le canal de transvasement (3) et est orienté dans le sens inverse de celui de l'écoulement de transvasement.
